Europäisches Patentamt
European Patent Office
Office européen des brevets

(19)

(11) Veröffentlichungsnummer: **0 153 442 A2**

(12)

# EUROPÄISCHE PATENTANMELDUNG

(21) Anmeldenummer: 84109488.1

(22) Anmeldetag: 09.08.84

(51) Int. Cl.[4]: C 08 L 81/04
C 08 K 3/20, C 08 J 3/24

(30) Priorität: 11.08.83 DE 3329076

(43) Veröffentlichungstag der Anmeldung:
04.09.85 Patentblatt 85/36

(84) Benannte Vertragsstaaten:
AT CH FR LI NL

(71) Anmelder: PCI Polychemie GmbH
Piccardstrasse 10
D-8900 Augsburg 1(DE)

(72) Erfinder: Psader, Josef
J.S. Bach-Strasse 12
D-8902 Neusäss(DE)

(72) Erfinder: Huber, Manfred, Dipl.-Ing.
Donauwörther Strasse 36
D-8901 Königsbrunn(DE)

(72) Erfinder: Lütti, Peter
Radaustrasse 26
D-8900 Augsburg(DE)

(74) Vertreter: Hansen, Bernd, Dr.rer.nat. et al,
Hoffmann, Eitle & Partner Patentanwälte Arabellastrasse 4
D-8000 München 81(DE)

(54) **Lagerstabile einkomponentige Massen auf Basis mercaptogruppenhaltiger Polymere.**

(57) Es werden einkomponentige lagerfähige, verarbeitungsfertig vorliegende Massen auf Basis merkaptogruppenhaltiger Polymere mit einem Gehalt an Zusatzstoffen sowie anorganischen oxidischen Härtern beschrieben, die dadurch gekennzeichnet sind, dass sie in homogener Verteilung und in direktem Kontakt enthalten:

(a) Metalloxide der Elemente der 4. Haupt- oder 7. Nebengruppe des Periodensystems in einer Menge, die zu einer Teilvernetzung führt, sowie

(b) Metallperoxide der Elemente der 2. Haupt- und/oder Nebengruppe, die die Vernetzung der restlichen Merkaptogruppen bewirken.

Es werden auch Verfahren zur Herstellung dieser Massen sowie deren Verwendung als Dichtungs- und Beschichtungsmassen beschrieben.

EP 0 153 442 A2

Croydon Printing Company Ltd.

0153442

40 632

BEZEICHNUNG GEÄNDERT
siehe Titelseite

Einkomponentige Massen auf Basis merkaptogruppenhaltiger Polymere mit verbesserten physikalischen Eigenschaften und guter Lagerfähigkeit

Die Erfindung betrifft einkomponentige Massen auf Basis merkaptogruppenhaltiger Polymere mit verbesserten mechanischen Eigenschaften und guter Lagerfähigkeit.

Es wurden bereits vielfältige Anstrengungen unternommen, die Lager- und Verarbeitungsfähigkeit von Polysulfidpolymeren, in Form von Einkomponentensystemen, die das Polymer und das Oxidationsmittel bereits homogen vermischt enthalten, zu verlängern, da die einfache Verarbeitbarkeit solcher Produkte dem Anwender entgegen kommt.

Solche Systeme sind bereits Gegenstand verschiedener

Patente und Patentanmeldungen und beinhalten unterschiedliche Lösungsvorschläge des angesprochenen Problems.

Das in der US-PS 3 349 047 beschriebene Kalziumperoxid enthaltende System bildet bei Kontakt mit der Luftfeuchtigkeit schnell eine Haut, wodurch die weitere Aushärtung nur langsam erfolgt. Ein ähnliches Verhalten zeigen merkaptoendgruppenhaltige Polysulfidpolymere, die Zinkoxid bzw. Zinkperoxid enthalten (US-PS 3 275 579 und US-PS 3 499 864).

In der DE-OS 23 21 598 wird ein Quasi-Einkomponentensystem vorgeschlagen, in dem das Polymer als Mantel ausgebildet ist, der einen Kern umschliesst, welcher das Härtungsmittel für das Polymer enthält. Ein weiteres Quasi-Einkomponentensystem verwendet die Oxidationsmittel in mikroverkapselter Form, so dass der Härter erst durch die Zerstörung der Mikrokapseln beim Verarbeitungsvorgang in Freiheit gesetzt wird und seine Wirkung entfaltet (DE-OS 25 26 603).

Die DE-PS 26 15 963 empfiehlt die Verwendung von wasserfreiem Kaliumpermanganat als latenten Härter in Einkomponentenmischungen von merkaptogruppenhaltigen Polymeren.

Alle vorgenannten Problemlösungen beinhalten jedoch auch wesentliche Nachteile. So zeigen die Kalziumperoxid und Zinkperoxid enthaltenden Massen eine sehr langsame Durchhärtung. Die quasi einkomponentigen Systeme erfordern einen beträchtlich höheren Herstellungsaufwand, wodurch die Produkte in vielen Gebieten nicht

mehr wirtschaftlich eingesetzt werden können. Die Lagerfähigkeit der Produkte ist kritisch, weil während des Herstellungsvorganges Kapselwände beschädigt werden können. Ein wesentlicher Nachteil des Kaliumpermanganats ist dessen starke Eigenfärbung, so dass es nicht zum Einsatz in hellen Massen geeignet ist.

Es war daher Aufgabe der vorliegenden Erfindung, Massen der eingangs genannten Art mit einem Härtungssystem für merkaptogruppenhaltige Polymere zu entwickeln, die die bisherigen Nachteile nicht aufweisen, schnelle Vernetzungen der Polymere bewirken und damit eine baldige Beanspruchung der Dichtungsmassen ermöglichen.

Die Lösung dieser Aufgabe wurde durch in den Patentansprüchen definierte Massen erreicht, wofür insbesondere endständige Merkaptogruppen enthaltende Polysulfidpolymere bevorzugt verwendet werden. Hierfür geeignete Polymere sind die Polysulfidpolymere LP-32 und LP-2 der Thiokol Chemical Corp., die im wesentlichen die Struktur

$$HS-(C_2H_4-O-CH_2-O-C_2H_4-S-S)_{23}-C_2H_4-O-CH_2-O-C_2H_4-SH$$

besitzen. LP-32 hat ein mittleres Molekulargewicht von etwa 4.000 mit einem Vernetzungsanteil von etwa 0,5 %; LP-2 hat ein mittleres Molekulargewicht von etwa 4.000 und einen Vernetzungsanteil von etwa 2 %. Weitere geeignete Produkte sind G1, G2, G11 und andere des VEB Chemiewerkes Greiz, Döhlau.

Während des Herstellungsprozesses werden den Polysulfidpolymeren gewisse Modifizierungs- und Hilfsstoffe zugesetzt. So werden als Füllstoffe Kalziumkarbonat, Kreide, Schwerspat, Titandioxid, Kaolin, Kieselsäure oder auch Russ in fein verteilter Form verwendet. Als Thixotropierungsmittel werden Bentonite, hochdisperse Kieselsäuren mit Oberflächen von über 50 $m^2/g$ eingearbeitet. Als Weichmacher werden im wesentlichen Dibutylphthalat, Benzylbutylphthalat, Di-(phenoxy-ethyl)formal und Chlorparaffine mit einem Chlorgehalt von etwa 50 Gew.% verwendet.

Gemäss der vorliegenden Erfindung erfüllt überraschenderweise ein Härtersystem von Metalloxiden der Elemente der 4. Haupt- oder der 7. Nebengruppe in Kombination mit Metallperoxiden von Elementen der 2. Haupt- und/oder Nebengruppe in optimaler Weise die an einen Härter in einem Einkomponentensysten gestellten Anforderungen. Insbesondere ist überraschend, dass es im Gegensatz zum bisherigen Stand der Technik gelungen ist, durch Zugabe der feindispersen Metalloxide in der Weise, dass dem Polymer zunächst das der Teilvernetzung dienende Oxid und erst nach einer gewissen Mischungsdauer das die Vernetzung der restlichen Merkaptogruppen bewirkende Metallperoxid zugegeben werden, in homogener Verteilung vorliegende, lagerstabile Dichtungs- und Beschichtungsmassen herzustellen, die nach ihrer Verarbeitung in der Praxis gerecht werdender Zeit zu Materialien mit überraschenderweise auch verbessertem Relaxationsverhalten durchhärten.

Die Gesamtmenge an Härtungskatalysator beträgt, in Abhängigkeit vom vorgesehenen Verwendungszweck zwischen 3 und 10 Gew.%, bezogen auf die Gesamtmasse.

Das Verhältnis des zugegebenen Metalloxids zum Metallperoxid kann in weiten Grenzen schwanken, nämlich von 1-99 zu 99-1. Bevorzugt wird jedoch ein Verhältnis in den Grenzen von 20-80 zu 80-20 angewandt.

Die Einarbeitung der Metalloxide bzw. -peroxide erfolgt unter Ausschluss von Luftfeuchtigkeit, bevorzugt unter leichtem Vakuum, zweckmässigerweise in einem evakuierbaren Gefäss mit Planetenrührwerk. Hierbei wird solange gemischt, bis die Grundmasse aus Polysulfid-(mercaptan)-polymer, Weichmacher, Füllstoff und die Mischung aus vorvernetzendem Oxid und feuchteaktivierbarem Peroxid eine homogene Masse bilden. Zum Teil während dieser Homogenisierung, zum Teil während der Konfektionierung und Lagerung erfolgt die erfindungsgemässe Teilvernetzung zu austauschfähigen Bindungen.

Erfindungsgemäss werden folgende Härtersysteme bevorzugt verwendet: Zur Teilvernetzung werden bevorzugt Bleioxid, Bleidioxid, Manganoxid und Mangandioxid in bestimmten Mengen verwendet. Besonders bevorzugt wird Bleioxid verwendet, da dieses nur eine geringe Eigenfarbe besitzt und dadurch auch hellfarbige Polymere durch den Härterzusatz nicht nachteilig beeinflusst werden.

Als zweite Komponente, welche die Endvernetzung unter

Feuchtigkeitszutritt bewirkt, werden bevorzugt die Peroxide des Zinks und des Kalziums verwendet. Besonders bevorzugt wird wegen seiner einfachen Herstellbarkeit und Preiswürdigkeit das Kalziumperoxid.

Überraschenderweise ergaben sich nun aufgrund der Zusammensetzung des Härtersystems besondere Eigenschaften hinsichtlich der Relaxationsfähigkeit der ausgehärteten Polysulfidpolymeren. Während Produkte, die lediglich eine Härterkomponente, z.B. Kalziumperoxid, enthalten, eine geringe Dehnfähigkeit und eine relativ schnelle Versprödung durch Alterung zeigen, insbesondere aber ein nur geringes Relaxationsverhalten besitzen, behalten die das erfindungsgemässe Härtersystem enthaltenden Produkte insbesondere ein deutlich verbessertes Relaxationsverhalten, eine nur geringe Neigung zur Rissbildung und eine geringe Versprödungsneigung. Diese verbesserten physikalischen Eigenschaften der Polysulfidpolymere zeigen sich insbesondere in der Praxis dann, wenn mit dem Polymer Fugen ausgefüllt werden, die durch Wärmeeinwirkung und damit durch auftretende Spannungen besonders beansprucht werden. Durch relativ geringe Zugkräfte bei hoher Dehnfähigkeit werden keine Abrisse von den Fugenflanken beobachtet. Darüber hinaus wird infolge eines verringerten karbonatbildenden Anteils an Metalloxid die Oberflächenbeschaffenheit der Massen verbessert.

Nachfolgende Beispiele sollen die Erfindung weiter erläutern ohne sie jedoch darauf zu beschränken.

Beispiele

Polysulfidpolymer (Type LP-32) wird in den unter den Beispielen 1 bis 7 genannten Mengenverhältnissen mit Weichmachern, Füllstoffen und den Metalloxiden bzw. -peroxiden in einem mit einem Planetenrührwerk ausgestatteten Behälter unter leichtem Vakuum intensiv durchmischt.

Nach erfolgter Durchmischung werden die verschiedenen Chargen 1 bis 8 unter Luft- und Feuchtigkeitsausschluss 5 Tage lang bei 50°C gelagert. Danach werden aus den Massen Streifen von 15 mm Breite und 5 mm Dicke geformt, die 6 Wochen bei 23°C und 60 % relativer Luftfeuchte zur vollständigen Vernetzung gelagert wurden. An diesen Prüfstreifen wurde die Relaxation ermittelt.

In Tabelle 1 sind alle Angaben Mengenangaben und bedeuten Gewichtsteile.

Tabelle 1

| Charge | 1* | 2 | 3 | 4 | 5* | 6 | 7* |
|---|---|---|---|---|---|---|---|
| Polysulfid (Thiokol LP-32) | 30 | 30 | 30 | 35 | 35 | 30 | 30 |
| Benzyl-butyl-phthalat | 15 | 15 | 15 | 20 | 20 | -- | -- |
| Di-(phenoxy-ethyl)formal | -- | -- | -- | -- | -- | 20 | 20 |
| Bariumoxid | 0,5 | 0,5 | 0,5 | -- | -- | -- | -- |
| Kalziumperoxid (70 %-ig) | 3,0 | 2,0 | 3,8 | 5 | 6 | 3 | 5 |
| Bentone 27 | 1,5 | 1,5 | 1,5 | 2 | 2 | 1,5 | 1,5 |
| Kalziumkarbonat (10-20 μ) | 50,0 | 50,0 | 50,0 | -- | -- | -- | -- |
| Schwerspat | -- | -- | -- | 37 | 37 | 44 | 44 |
| Bleioxid | -- | 1,0 | -- | 1 | -- | 1,5 | -- |
| Bleidioxid | -- | -- | 0,2 | -- | -- | -- | -- |

Die mit * versehenen Chargen 1, 5 und 7 sind Vergleichsversuche und enthalten lediglich Kalziumperoxid als Vernetzungsmittel. Bei der Prüfung auf ihr Relaxationsverhalten zeigen diese Produkte ausgesprochen schlechte Werte, d.h. die Zugspannung dieser Produkte bleibt auch bei 50 % Dehnung noch nach 24-stündiger Belastung mit Werten von über 80 % erhalten, während sie in den erfindungsgemässen Massen auf Werte von 50 bis 67 % zurück geht, wie aus Tabelle 2 hervorgeht.

Tabelle 2

| | 1 | 2 | 3 | 4 | 5 | 6 | 7 |
|---|---|---|---|---|---|---|---|
| Zugspannung bei 50 % Dehnung $N/mm^2$ | 0,65 | 0,62 | 0,60 | 0,53 | 0,54 | 0,61 | 0,72 |
| Zugspannung nach 24 Stunden $N/mm^2$ | 0,55 | 0,35 | 0,40 | 0,34 | 0,45 | 0,34 | 0,63 |
| Zugspannung nach 24 Stunden in % des Ausgangswertes | 84,6 | 56,5 | 66,7 | 64,1 | 83,3 | 57,7 | 87,5 |

Vergleichbare Relaxationseigenschaften erhält man auch bei Verwendung folgenden Oxids zur Vorvernetzung entsprechend Anspruch 1(a) MnO und folgender Peroxide, gemäss Anspruch 1(b) $MgO_2$, $BaO_2$ und $ZnO_2$.

Einkomponentige Massen auf Basis merkaptogruppenhaltiger Polymere mit verbesserten physikalischen Eigenschaften und guter Lagerfähigkeit

## P a t e n t a n s p r ü c h e

1. Einkomponentige lagerfähige, verarbeitungsfertig vorliegende Massen auf Basis merkaptogruppenhaltiger Polymere mit einem Gehalt an Zusatzstoffen sowie anorganischen oxidischen und peroxidischen Härtern, dadurch g e k e n n z e i c h n e t , daß sie in homogener Verteilung und in direktem Kontakt enthalten:

   (a) Metalloxide der Elemente der 4. Hauptgruppe oder der 7. Nebengruppe des Periodensystems in einer Menge, die zu einer Teilvernetzung führt, sowie
   (b) Metallperoxide der Elemente der 2. Haupt- und/oder Nebengruppe, die die Vernetzung der restlichen Merkaptogruppen bewirken,
   (c) wobei die Gesamtmenge an Härtungskatalysator zwischen 3 und 10%, bezogen auf das Gewicht der Gesamtmasse, liegt.

2. Massen nach Anspruch 1, dadurch g e k e n n z e i c h n e t, daß sie zur Teilvernetzung Blei-II-oxid und zur vollständigen Vernetzung Kalziumperoxid enthalten.

3. Massen nach Anspruch 1 und 2, dadurch g e k e n n - z e i c h n e t , daß sie die zwei Stufen der Vernetzung bewirkenden Oxide im Gewichtsverhältnis 20:80 bis 80:20 enthalten.

4. Masse nach Ansprüchen 1, 2 oder 3, dadurch g e - k e n n z e i c h n e t , daß sie keinen freien Schwefel zur Stabilisierung enthält und/oder von Aminen frei ist.

5. Verfahren zur Herstellung von Massen nach den Ansprüchen 1 bis 4, dadurch g e k e n n z e i c h - n e t , daß die merkaptogruppenhaltigen Polymere mit den Zusatzstoffen unter Feuchtigkeitsausschluß zunächst mit Metalloxiden der Elemente der 4. Hauptgruppe oder der 7. Nebengruppe des Periodensystems in einer Menge, die zu einer Teilvernetzung führt, gemischt werden, wonach Metallperoxide der Elemente der 2. Haupt- und/oder Nebengruppe, die die Vernetzung der restlichen Merkaptogruppen bewirken, zugefügt werden.

6. Verwendung von Massen nach den Ansprüchen 1 bis 4, als Dichtungs- und Beschichtungsmassen mit in ausgehärtetem Zustand verbesserten Relaxationsverhalten.